# EUROPÄISCHE PATENTSCHRIFT

(11) **EP 1 285 173 B1**
(45) Veröffentlichungstag und Bekanntmachung des Hinweises auf die Patenterteilung: **01.09.2004**
(21) Anmeldenummer: 01949319.6
(22) Anmeldetag: 08.05.2001
(51) Int. Cl.: F16B 13/06

(54) **SPREIZANKER ZUR BEFESTIGUNG AN EINEM PLATTENFÖRMIGEN BAUSTOFF**
EXPANSION ANCHOR WHICH CAN BE FIXED TO A PANEL-TYPE BUILDING MATERIAL
ELEMENT D'ANCRAGE EXTENSIBLE DESTINE A ETRE FIXE A UN MATERIAU DE CONSTRUCTION EN FORME DE PLAQUE

(30) Priorität: 30.05.2000 DE 10026886
(43) Veröffentlichungstag der Anmeldung: 26.02.2003
(73) Patentinhaber: fischerwerke Artur Fischer GmbH & Co. KG, 72178 Waldachtal (DE)
(72) Erfinder: HOPPE, Hartmut, 72160 Horb (DE)
(86) Internationale Anmeldenummer: PCT/EP2001/005176
(87) Internationale Veröffentlichungsnummer: WO 2001/092736

(56) Entgegenhaltungen:
- EP-A- 0 503 677
- DE-A- 19 650 864
- US-A- 2 159 580

## Beschreibung

Die Erfindung betrifft einen Spreizanker zum Befestigen an einem plattenförmigen Baustoff mit den Merkmalen des Oberbegriff des Anspruchs 1. Ein plattenförmiger Baustoff ist beispielsweise eine Gipskarton- oder eine sonstige Baustoffplatte. Es kann sich beispielsweise auch um eine Wand eines Hohlkammersteins oder dgl. handeln. Auch eignet sich der erfindungsgemäße Spreizanker zur Verankerung in einem weichen, beispielweise porösen Baustoff wie Gasbeton.

Ein derartiger Spreizanker ist bekannt aus der DE 197 20 033 A1. Der bekannte Spreizanker weist eine Ankerhülse mit von der Ankerhülse nach vorn abstehenden Spreizzungen auf. Des Weiteren weist der bekannte Spreizanker einen als Spreizkonus ausgebildeten Spreizkörper auf, der vor den Spreizzungen angeordnet ist. Zum Aufspreizen der Spreizzungen wird der Spreizkörper durch Eindrehen einer Spreizschraube zwischen die Spreizzungen eingezogen, wobei der Spreizkörper die Spreizzungen auseinander drückt, d. h. aufspreizt. Die aufgespreizten Spreizzungen hintergreifen den plattenförmigen Baustoff und verankern dadurch den Spreizanker formschlüssig am Baustoff.

Der bekannte Spreizanker hat den Nachteil, dass der Spreizkörper zwischen den Spreizzungen herausfällt, wenn die Spreizschraube aus dem Spreizanker ausgedreht oder spätestens wenn sie beim Versuch, die Spreizschraube erneut in den Spreizanker einzuschrauben, mit geringem axialen Druck gegen den Spreizkörper gedrückt wird. Ein Ausdrehen der Spreizschraube nach dem Verankern des Spreizankers kann beispielsweise zu Renovierungszwecken oder beim Auswechseln oder Abnehmen eines mit dem Spreizanker befestigten Gegenstandes erforderlich oder zumindest wünschenswert sein. Eine Wiederverwendung des einmal verankerten, bekannten Spreizankers ist nicht möglich, seine Ankerhülse muss nach Ausdrehen aus dem Bohrloch entfernt und es muss ein neuer Spreizanker verwendet werden. Der Spreizkörper verbleibt im unzugänglichen Hohlraum auf einer Rückseite des plattenförmigen Baustoffs.

Der Erfindung liegt die Aufgabe zugrunde, einen Spreizanker der vorstehend erläuterten Art so weiterzubilden, dass er nach Ausdrehen einer eingeschraubten Spreizschraube wiederverwendbar ist.

Diese Aufgabe wird erfindungsgemäß durch die Merkmale des Anspruchs 1 gelöst. Der erfindungsgemäße Spreizanker weist eine Rastverbindung auf, die beim Einziehen des Spreizkörpers zwischen die Spreizzungen einrastet. In eingerastetem Zustand hält die Rastverbindung den Spreizkörper des erfindungsgemäßen Spreizankers in der zwischen die Spreizzungen eingezogenen Stellung an der Ankerhülse. Dadurch verbleibt der Spreizkörper auch nach einem Ausdrehen der Spreizschraube in der zwischen die Spreizzungen eingezogenen Stellung. Auch wenn bei einem anschließenden Wiedereinführen der Spreizschraube in den Spreizanker ein axialer Druck von der Spreizschraube auf den Spreizkörper ausgeübt wird, hält die Rastverbindung des erfindungsgemäßen Spreizankers den Spreizkörper in der zwischen die Spreizzungen eingerasteten Stellung. Da der Spreizkörper in der zwischen die Spreizzungen eingezogenen Stellung die Spreizzungen aufgespreizt hält, bewirkt die Rastverbindung, dass der erfindungsgemäße Spreizanker am Baustoff verankert bleibt, auch wenn die Spreizschraube ausgedreht wird. Der erfindungsgemäße Spreizanker hat somit den Vorteil, dass sein Spreizkörper nicht verloren gehen kann, wenn die Spreizschraube nach der Verankerung des Spreizankers ausgedreht wird. Weiterer Vorteil des erfindungsgemäßen Spreizankers ist, dass er auch nach Ausdrehen der Spreizschraube im Baustoff verankert bleibt. Die Rastverbindung des Spreizkörpers mit der Ankerhülse kann auch mittelbar über die Spreizzungen erfolgen, d. h. dass der Spreizkörper mit den Spreizzungen verrastet ist.

Bei derer Ausgestaltung der Erfindung weist der Spreizanker einen oder mehrere, im Wesentlichen achsparallel angeordnete Rasthaken auf, der gemeinsam mit einer ebenfalls im Wesentlichen achsparallel angeordneten Rastzunge die Rastverbindung bildet. In eingerastetem Zustand übergreift der Rasthaken ein freies Ende der Rastzunge und hält dadurch den Spreizkörper in der zwischen die Spreizzungen eingezogenen Stellung.

Dabei kann der Rasthaken mit dem Spreizkörper oder der Ankerhülse verbunden sein, die Rastzunge ist mit dem jeweils anderen dieser beiden Teile verbunden. Der Rasthaken und/oder die Rastzunge sind federelastisch.

Bei einer Weiterbildung der Erfindung weist der Spreizanker eine Verdrehsicherungseinrichtung auf, die den Spreizkörper drehsicher an der Ankerhülse hält bzw. führt. Die Verdrehsicherungseinrichtung verhindert ein Mitdrehen des Spreizkörpers mit der Spreizschraube beim Einschrauben der Spreizschraube in den Spreizanker. Die Verdrehsicherungseinrichtung kann beispielsweise eine Nase, Rippe oder dgl. aufweisen, die zwischen die Spreizzungen eingreift und dadurch den Spreizkörper drehsicher und axial verschieblich an der Ankerhülse führt. Auch kann bei Ausgestaltungen der Erfindung der Rasthaken und/oder die Rastzunge der Rasteinrichtung die Verdrehsicherungseinrichtung bilden.

In bevorzugter Ausgestaltung der Erfindung sind der Spreizkörper und die Ankerhülse einstückig miteinander, sie sind über eine Solltrennstelle miteinander verbunden, die beim Einziehen des Spreizkörpers zwischen die Spreizzunge durchtrennt wird, beispielsweise abreißt. Diese Ausgestaltung der Erfindung ermöglicht eine einstückige Herstellung des erfindungsgemäßen Spreizankers und hat den weiteren Vorteil, dass der Spreizkörper bis zum Einschrauben der Spreizschraube verliersicher mit der Ankerhülse verbunden ist.

In bevorzugter Ausgestaltung ist der erfindungsgemäße Spreizanker aus Kunststoff beispielsweise durch Spritzgießen oder Spritzpressen hergestellt. Dies ermöglicht eine kostengünstige Herstellung des erfindungsgemäßen Spreizankers. Insbesondere lassen sich der Spreizkörper und die Ankerhülse problemlos und in einem Arbeitsgang einstückig aus Kunststoff herstellen.

Die Erfindung wird nachfolgend anhand eines in der Zeichnung dargestellten Ausführungsbeispiels näher erläutert. Es zeigen:
- Figur 1: eine perspektivische Darstellung eines erfindungsgemäßen Spreizankers;
- Figur 2: eine Seitenansicht des Spreizankers aus Figur 1; und
- Figur 3: eine Verwendung des Spreizankers aus Figur 1 in Halbschnittdarstellung.

Die Figuren weisen unterschiedlichen Maßstab auf.

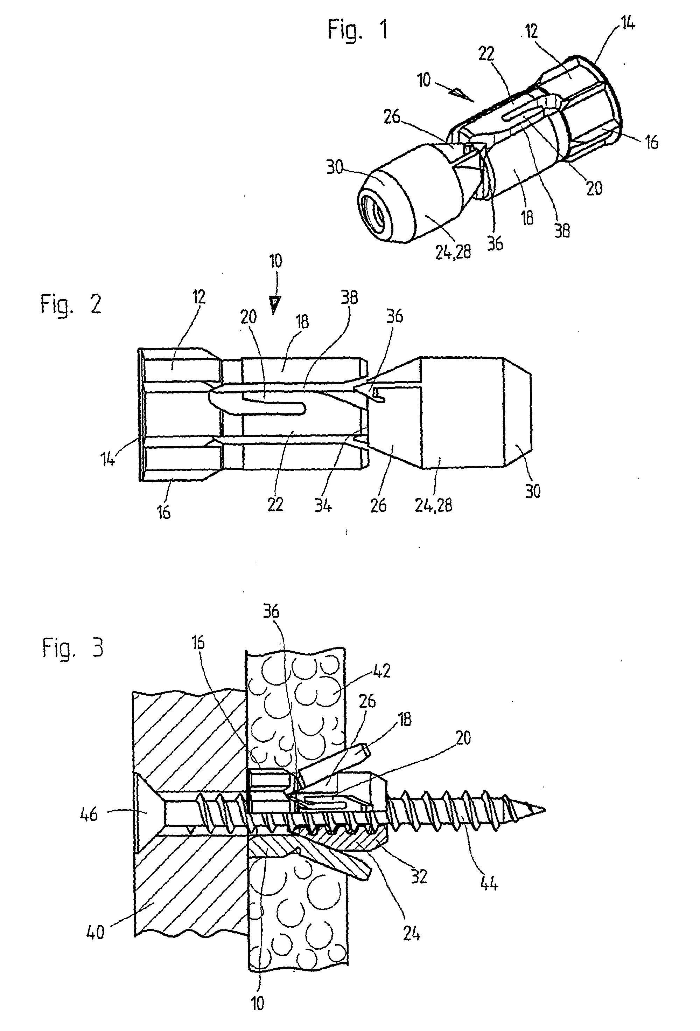

Der in Figuren 1 und 2 dargestellte, erfindungsgemäße Spreizanker 10 ist einstückig durch Spritzgießen aus Kunststoff hergestellt. Er weist eine Ankerhülse 12 auf, die ein hinteres Ende des Spreizankers 10 bildet. Die Ankerhülse 12 weist einen radial nach außen überstehenden Setztiefenbund 14 an ihrem hinteren Stirnende auf. Des Weiteren stehen von der Ankerhülse 12 achsparallel verlaufende Drehsicherungsrippen 16 sternförmig ab, die ein Mitdrehen des Spreizankers 10 beim Einschrauben einer in Figuren 1 und 2 nicht dargestellten Spreizschraube verhindern sollen.

Von der Ankerhülse 12 stehen nach vorn Spreizzungen 18 ab. Im dargestellten und beschriebenen Ausführungsbeispiel weist der Spreizanker 10 zwei Spreizzungen 18 auf, die sich jeweils über einen Teil eines Umfangs des Spreizankers 10 erstrecken und die im dargestellten Ausführungsbeispiel Abstand voneinander aufweisen. Die Spreizzungen 18 sind einstückig mit der Ankerhülse 12, sie stehen von deren vorderer, dem Setztiefenbund 14 abgewandter Stirnseite in Verlängerung einer Wandung der Ankerhülse 12 ab.

In einem Zwischenraum zwischen den Spreizzungen 18 weist der Spreizanker 10 Rastzungen 20 auf, deren freies Ende der Ankerhülse 12 zugewandt ist. An einem der Ankerhülse 12 fernen Ende gehen die Rastzungen 20 in einen Verbinder 22 über, der das ferne Ende der Rastzungen 20 einstückig mit der Ankerhülse 12 verbindet. Der Verbinder 22 verläuft achsparallel zum Spreizanker 10 und ist im Umfangsbereich des Spreizankers 10 zwischen den Rastzungen 20 angeordnet. Die Rastzungen 20 sind elastisch federnd in Umfangsrichtung ausgebildet.

An einem freien, vorderen, der Ankerhülse 12 fernen Ende der Spreizzungen 18 ist ein Spreizkörper 24 angeordnet. Der Spreizkörper 24 weist an seinem den Spreizzungen 18 zugewandten Ende einen Spreizkonus 26 auf, er geht dann in einen zylindrischen Teil 28 über und endet an einem vorderen Ende mit einem sich verjüngenden Konus (Fase 30). Der Spreizkörper 24 weist ein durchgehendes Innengewinde 32 (Figur 3) auf.

Der Spreizkörper 24 ist über eine Solltrennstelle 34 einstückig mit den Verbindern 22 der Rastzungen 20 verbunden. Die Solltrennstellen 34 sind dünne Materialstellen, die bei einem noch zu beschreibenden Einziehen des Spreizkörpers 24 zwischen die Spreizzungen 18 durchreißen. Es sind somit sämtliche Elemente des erfindungsgemäßen Spreizankers 10 einstückig miteinander und in einem Arbeitsgang durch Spritzgießen aus Kunststoff hergestellt.

Am Spreizkonus 26 sind zwei Rasthaken 36 seitlich angeformt, die einander gegenüberliegend angeordnet sind. Die Rasthaken 36 stehen radial nicht über einen Umfang des Spreizankers 10 über, sie sind in Verlängerung eines Schlitzes 38 zwischen den Rastzungen 20 und den Spreizzungen 18 angeordnet. Die Lage und Anordnung der Rasthaken ist gut in Figur 1 erkennbar.

Die Verwendung des erfindungsgemäßen Spreizankers 10 ist in Figur 3 dargestellt. Der Spreizanker 10 dient zur Befestigung eines Gegenstands 40 beispielsweise an einer Gipskartonplatte 42. Zur Befestigung wird der Spreizanker 10 in seinem in Figuren 1 und 2 dargestellten Grundzustand in ein durch die Gipskartonplatte 42 durchgehendes Bohrloch eingesetzt, bis sein Setztiefenbund 14 an einer Oberfläche der Gipskartonplatte 42 anliegt. Die Drehsicherungsrippen 16 drücken sich dabei in den Gipskarton ein und verhindern ein Mitdrehen des Spreizankers 10 beim späteren Eindrehen einer Spreizschraube 44. Nach dem Einsetzen des Spreizankers 10 in das Bohrloch wird der zu befestigende Gegenstand 40 auf die Gipskartonplatte 42 aufgesetzt und die Spreizschraube 44 wird durch ein Bohrloch im Gegenstand 40 hindurch in den Spreizanker 10 gesteckt. Die Spreizschraube 44 lässt sich durch die Ankerhülse 12 und die Spreizzungen 18 bis zum Spreizkörper 24 durchstecken. In den Spreizkörper 24 wird die Spreizschraube 44 eingeschraubt. Sobald ein Schraubenkopf 46 der Spreizschraube 44 am zu befestigenden Gegenstand 40 zur Anlage kommt, zieht die Spreizschraube 44 den Spreizkörper 24 zwischen die Spreizzungen 18 ein. Zu Beginn des Einziehens des Spreizkörpers 24 zwischen die Spreizzungen 18 reißen die Solltrennstellen 34 durch, so dass sich der Spreizkörper 24 zwischen die Spreizzungen 18 einziehen lässt. Beim Einziehen zwischen die Spreizzungen 18 drückt der Spreizkonus 26 des Spreizkörpers 24 die Spreizzungen 18 auseinander, der Spreizkörper 24 spreizt die Spreizzungen 18 auf und verankert dadurch den Spreizanker 10 formschlüssig an der Gipskartonplatte 42.

Beim Einziehen des Spreizkörpers 24 zwischen die Spreizzungen 18 schieben sich die Spreizhaken 36 des Spreizkörpers 24 in den Schlitz 38 zwischen den Rastzungen 20 und den Spreizzungen 18. Dabei drücken die Rasthaken 36 die Rastzungen 20 in Umfangsrichtung elastisch zur Seite. Sobald die Rasthaken 36 die freien, der Ankerhülse 12 zugewandten Enden der Rastzungen 20 überwunden haben, federn die Rastzungen 20 zurück und in die Rasthaken 36 hinein. Die Rasthaken 36 übergreifen die Rastzungen 20 an ihren freien Enden, die Rasthaken 36 des Spreizkörpers 34 sind mit den Spreizzungen 18 der Ankerhülse 12 verrastet. Die Rasthaken 36 und die Rastzungen 20 bilden eine Rastverbindung 20, 36, die den Spreizkörper 24 in der zwischen die Spreizzungen 18 eingezogenen Stellung halten. In dieser Stellung hält der Spreizkörper 24 die Spreizzungen 18 aufgespreizt. Durch die Rastverbindung 20, 36 des Spreizkörpers 24 mit der Ankerhülse 12 bleibt der Spreizkörper 24 in der zwischen die Spreizzungen 18 eingezogenen, die Spreizzungen 18 aufgespreizt haltenden Stellung, auch wenn die Spreizschraube 44 aus dem Spreizanker 10 ausgedreht wird. Der Spreizanker 10 bleibt somit auch nach einem Ausdrehen der Spreizschraube 44 in der Gipskartonplatte 42 verankert, die Spreizschraube 44 lässt sich problemlos mehrfach ausdrehen und wieder einschrauben.

Beim Einziehen zwischen die Spreizzungen 18 drückt der Spreizkonus 26 des Spreizkörpers 24 nicht nur die Spreizzungen 18, sondern auch die Verbinder 22 der Rastzungen 20 mit der Ankerhülse 12 auseinander, d. h. der Spreizkörper 24 spreizt beim Einziehen zwischen die Spreizzungen 18 auch die Verbinder 22 auf. Die Verbinder 22 bilden somit ebenfalls Spreizzungen oder Spreizelemente, die aufgespreizt werden und den Spreizanker 10 formschlüssig an der Gipskartonplatte 42 verankern.

Die beim Einziehen des Spreizkörpers 24 zwischen die Spreizzungen 18 in den Schlitz 38 zwischen den Rastzungen 20 und den Spreizzungen 18 gelangenden Rasthaken 36 bildet eine Verdrehsicherungseinrichtung 18, 20, 36, 38, die ein Verdrehen des Spreizkörpers 24 gegenüber der Ankerhülse 12 und dadurch ein Mitdrehen des Spreizkörpers 24 mit der Spreizschraube 44 beim Einziehen des Spreizkörpers 24 zwischen die Spreizzungen 18 verhindert.

## Patentansprüche

1. Spreizanker mit einer Ankerhülse, die nach vom abstehende Spreizzungen aufweist, welche durch Einziehen eines Spreizkörpers zwischen die Spreizzungen aufspreizbar sind, wobei der Spreizanker (10) eine Rastverbindung (20, 36) aufweist, die den Spreizkörper (24) in einer zwischen die Spreizzungen (18) eingezogenen, die Spreizzungen (18) aufgespreizt haltenden Stellung mit der Ankerhülse (12) verbindet, **dadurch gekennzeichnet, dass** die Rastverbindung (20, 36) einen Rasthaken (36) aufweist, der in eingerastetem Zustand ein freies Ende einer im Wesentlichen achsparallel angeordneten Rastzunge (20) übergreift, wobei der Rasthaken (36) mit dem Spreizkörper (24) oder der Ankerhülse (12) und die Rastzunge (20) mit dem jeweils anderen dieser beiden Teile (12, 24) verbunden ist, und wobei der Rasthaken (36) und/oder die Rastzunge (20) federelastisch sind.

2. Spreizanker nach Anspruch 1, **dadurch gekennzeichnet, dass** der Spreizanker (10) eine Verdrehsicherungseinrichtung (18, 20, 36, 38) aufweist, die den Spreizkörper (24) drehsicher an der Ankerhülse (12) hält.

3. Spreizanker nach Anspruch 1, **dadurch gekennzeichnet, dass** der Spreizkörper (24) über eine Solltrennstelle (34) einstückig mit der Ankerhülse (12) ist.

4. Spreizanker nach Anspruch 1, **dadurch gekennzeichnet, dass** der Spreizanker (10) aus Kunststoff besteht.

## Claims

1. Expansible anchor having an anchor sleeve with forwardly projecting expansion tongues that can be spread open by drawing in an expander body between the expansion tongues, the expansible anchor (10) having a locking connection (20, 36) which connects the expander body (24), in a position in which it is drawn in between the expansion tongues (18) and holds the expansion tongues (18) in a spread-open position, to the anchor sleeve (12), **characterized in that** the locking connection (20, 36) has a locking hook (36) which in the engaged state engages over a free end of a locking tongue (20) arranged substantially axially parallel, the locking hook (36) being connected to the expander body (24) or the anchor sleeve (12), and the locking tongue (20) being connected to the respective other of those two components (12, 24), and the locking hook (36) and/or the locking tongue (20) being resilient.

2. Expansible anchor according to claim 1, **characterized in that** the expansible anchor (10) has an anti-rotation device (18, 20, 36, 38) which holds the expander body (24) non-rotatably against the anchor sleeve (12).

3. Expansible anchor according to claim 1, **characterized in that** the expander body (24) is integral with the anchor sleeve (12) by way of a predefined breakage point (34).

4. Expansible anchor according to claim 1, **characterized in that** the expansible anchor (10) consists of plastics material.

## Revendications

1. Tampon doté d'une gaine qui comporte des pièces extensibles décalées vers l'avant qui peuvent être écartées par l'introduction d'un corps écarteur entre les pièces extensibles, le tampon (10) présentant un raccord à cran (20, 36) qui relie à la gaine (12) le corps écarteur (24) dans une position entre les pièces extensibles (18) qui maintient les pièces écartées, **caractérisé en ce que** le raccord à cran (20, 36) comprend un crochet d'encliquetage (36) qui, en position enclenchée, s'accroche à une extrémité libre d'une languette d'encliquetage (20) disposée essentiellement en parallèle de l'axe, le crochet d'encliquetage (36) étant relié au corps écarteur (24) ou à la gaine (12) et la languette d'encliquetage (20) à l'autre de ces deux pièces (12, 24) et le crochet d'encliquetage (36) et/ou la languette d'encliquetage (20) étant élastique(s).

2. Tampon selon la revendication 1, **caractérisé en ce que** le tampon (10) comporte un dispositif antirotation (18, 20, 36, 38) qui maintient le corps écarteur (24) sur la gaine (12) en l'empêchant de tourner.

3. Tampon selon la revendication 1, **caractérisé en ce que** le corps écarteur (24) est relié d'un seul tenant à la gaine (12) via un point de rupture théorique (34).

4. Tampon selon la revendication 1, **caractérisé en ce que** le tampon (10) est en plastique.
